# EUROPEAN PATENT APPLICATION

(11) **EP 1 950 529 A1**
(43) Date of publication of application: **30.07.2008**
(21) Application number: 08100843.5
(22) Date of filing: 23.01.2008
(51) Int. Cl.: G01C 19/56

(54) **Angular velocity sensor**

(30) Priority: 23.01.2007 JP 2007012166
(71) Applicant: Fujitsu Ltd., Kawasaki-shi, Kanagawa 211-8588 (JP)
(72) Inventor: Yamaji, Takayuki, Yokohama-shi Kanagawa 222-0033 (JP); Ishikawa, Hiroshi, Kawasaki-shi Kanagawa 211-8588 (JP); Takahashi, Yuji, Kawasaki-shi Kanagawa 211-8588 (JP); Katsuki, Takashi, Kawasaki-shi Kanagawa 211-8588 (JP); Nakazawa, Fumihiko, Kawasaki-shi Kanagawa 211-8588 (JP); Inoue, Hiroaki, Kawasaki-shi Kanagawa 211-8588 (JP)
(74) Representative: Wilding, Frances Ward

(57) **Abstract**

An angular velocity sensor includes: a first tuning-fork vibrator having a first base and first arms extending from the first base in a first direction; a second tuning-fork vibrator having a second base and second arms extending from the second base in a second direction; and a double gimbal portion that has a drive gimbal portion vibrating about an axis extending in a fourth direction, and a sense gimbal portion vibrating about an axis extending in a fifth direction and senses an angular velocity about an axis extending in a third direction.

## Description

### BACKGROUND OF THE INVENTION

### 1. Field of the Invention

The present invention generally relates to angular velocity sensors, and more particularly, to an angular velocity sensor capable of sensing angular velocities about three orthogonal axes.

### 2. Description of the Related Art

An angular velocity sensor is a sensor that senses an angular velocity in rotation, and is used in systems for preventing camera shakes, for navigating vehicles, for controlling positions of vehicles or postures of robots, and the likes. An angular velocity sensor having a tuning-fork vibrator is known as one of the angular velocity sensors. The tuning-fork vibrator has a base and multiple arms that extend from the base, and functions to sense angular velocities about sensing axes in which the arms extend. Japanese Patent Application Publication Nos. 2006-300577 and 2006-308543 disclose a technique using two angular velocity sensors formed by tuning-fork vibrators having respective sensing axes.

According to the technique proposed in the above publications, angular velocities about three different sensing axes can be sensed by three tuning-fork vibrations arranged so that arms of the tuning-fork vibrators are respectively arranged in the three directions. However, this arrangement needs a large volume for mounting.

### SUMMARY OF THE INVENTION

It is desirable to provide a three axial angular velocity sensor that needs a reduced volume for mounting.

According to an embodiment of one aspect of the present invention, there is provided an angular velocity sensor including: a first tuning-fork vibrator having a first base and first arms extending from the first base in a first direction; a second tuning-fork vibrator having a second base and second arms extending from the second base in a second direction; and a double gimbal portion that has a drive gimbal portion vibrating about an axis extending in a fourth direction, and a sense gimbal portion vibrating about an axis extending in a fifth direction and senses an angular velocity about an axis extending in a third direction.

### BRIEF DESCRIPTION OF THE DRAWINGS

Fig. 1 is a perspective view of an angular velocity sensor in accordance with a first embodiment of the present invention;
Fig. 2 is a cross-sectional view of a third angular velocity sensing part;
Fig. 3 is a perspective view of the angular velocity sensor of the first embodiment;
Fig. 4 is a perspective view of a tuning-fork vibrator;
Figs. 5A and 5B respectively show vibration modes of the tuning-fork vibrator;
Fig. 6 is a plan view of a double gimbal portion;
Fig. 7 is a diagram explaining an operation of the double gimbal portion;
Figs. 8A and 8B are respectively cross-sectional views of the double gimbal portion;
Fig. 9 is a perspective view of an angular velocity sensor in accordance with a second embodiment of the present invention; and
Fig. 10 is a plan view of a double gimbal portion in accordance with a third embodiment of the present invention.

### DESCRIPTION OF THE PREFERRED EMBODIMENTS

A description will now be given of embodiments of the present invention with reference to the accompanying drawings.

### [First Embodiment]

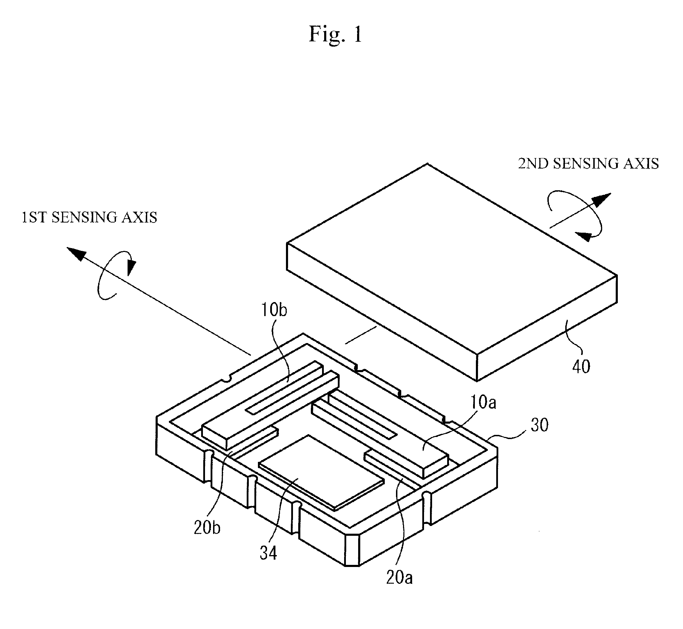

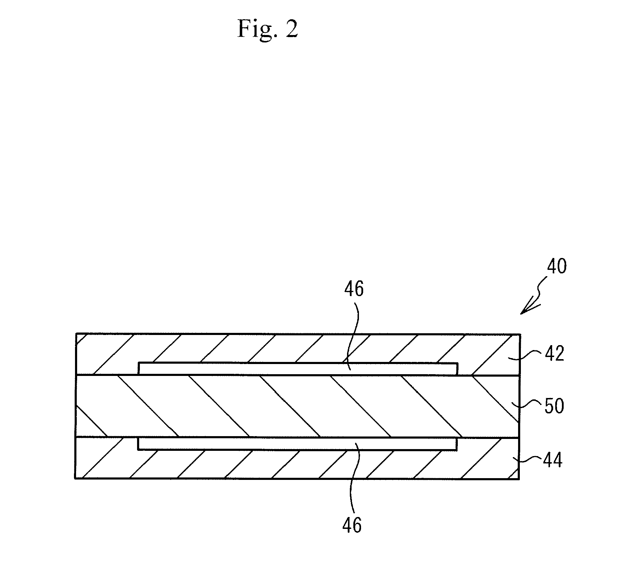

Fig. 1 is a perspective of an angular velocity sensor in accordance with a first embodiment before a third angular velocity sensing part 40 having a double gimbal portion is housed in a package 30. A first tuning-fork vibrator 10a and a second tuning-fork vibrator 10b are attached to the package 30 of a cavity type with interposing support portions 20a and 20b, respectively. The first and second tuning-fork vibrators 10a and 10b are orthogonal to each other, and are respectively capable of sensing angular velocities about first and second sensing axes extending in respective longitudinal directions. The package 30 is equipped with a control circuit 34, which may have electronic components mounted on a substrate. The control circuit 34 controls the first and second tuning-fork vibrators 10a and 10b and a double gimbal portion 50 shown in Fig. 2. More particularly, the control circuit 34 supplies drive signals to the first and second tuning-fork vibrators 10a and 10b and the double gimbal portion 50, and receive sense signals therefrom.

Fig. 2 is a cross-sectional view of the third angular velocity sensing part 40. Glass plates 42 and 44 are provided on both sides of the double gimbal portion 50. Gaps 46 are formed at sides of the glass plates closer to the double gimbal portion 50 in order to prevent vibration of a gimbal portion of the double gimbal portion 50. A through electrode (not shown) is provided in at least either one of the glass plates 42 and 44.

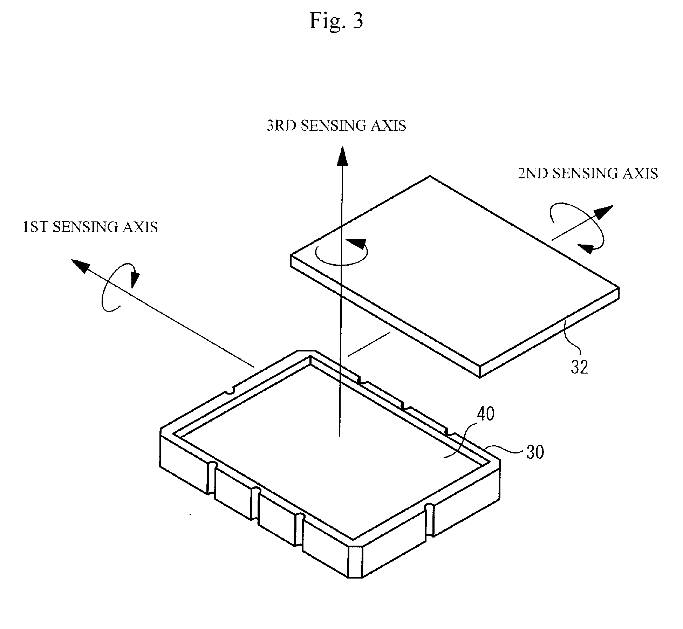

Fig. 3 is a perspective view of the angular velocity sensor after the third angular velocity sensing part 40 is housed in the package 30. The third angular velocity sensing part 40 is mounted on the first and second tuning-fork vibrators 10a and 10b. The third angular velocity sensing part 40 has the first and second sensing axes, and the double gimbal portion sensing an angular velocity about a third sensing axis orthogonal to the first and second sensing axes. The angular velocity sensor in accordance with the first embodiment is completed by attaching a lid 32 on the third angular velocity sensing part 40.

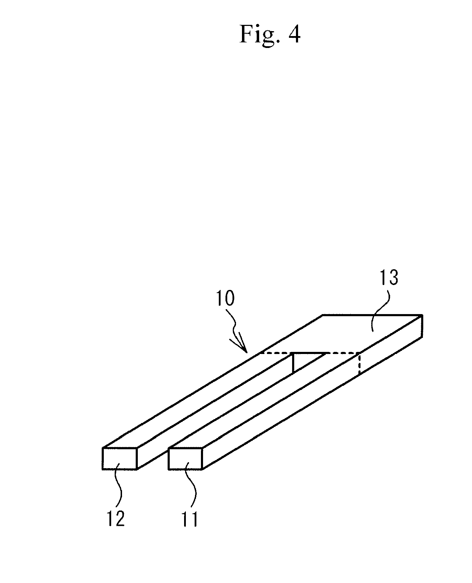

Fig. 4 is a perspective view of a tuning-fork vibrator 10, which is the same as each of the first and second tuning-fork vibrators 10a and 10b is formed. The tuning-fork vibrator 10 may be made of a piezoelectric material such as lithium niobate or lithium tantalate, and a base 13 and two (multiple) arms 11 and 12 extending from the base 13. The base 13 does not vibrate greatly. Thus, as shown in Fig. 1, the tuning-fork vibrator 10 is housed in the package 30 so that the base 13 is supported by a support portion 20a or 20b. The arms 11 and 12 vibrate and thus sense a vibration.

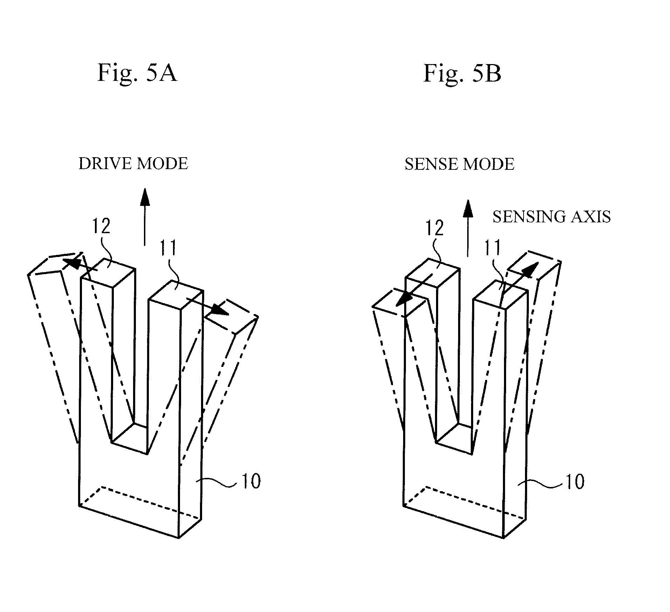

Figs. 5A and 5B show drive and sense modes of the tuning-form vibrator 10, respectively. Referring to Fig. 5A, a drive signal is applied to drive electrodes (not shown) of the tuning-fork vibrator 10, which vibrates in a vibration mode in which the arms 11 and 12 become close to and away from each other in turn. This vibration is parallel to a plane that includes the arms 11 and 12. When an angular velocity is applied to the sensing axis, another vibration mode is generated due to Coriolis force as shown in Fig. 5B in which the arms 11 and 12 vibrate in opposite directions. This vibration is a twist vibration perpendicular to the plane that includes the arms 11 and 12. The twist vibration is sensed via detection electrodes (not shown), so that the angular velocity about the sense axis can be detected. The vibration mode used for driving is referred to as drive mode, and the vibration mode used for sensing is referred to as sense mode. Through the above mechanism, the tuning-fork vibrator 10 is capable of sensing the angular velocity about the axis in which the arms 11 and 12 extend. The drive mode and the sense mode are not limited to the modes shown in Figs. 5A and 5B, respectively. Another mode may be used as long as a sense mode is generated in the drive mode due to Coriolis force. The tuning-fork vibrator 10 may have three or more arms.

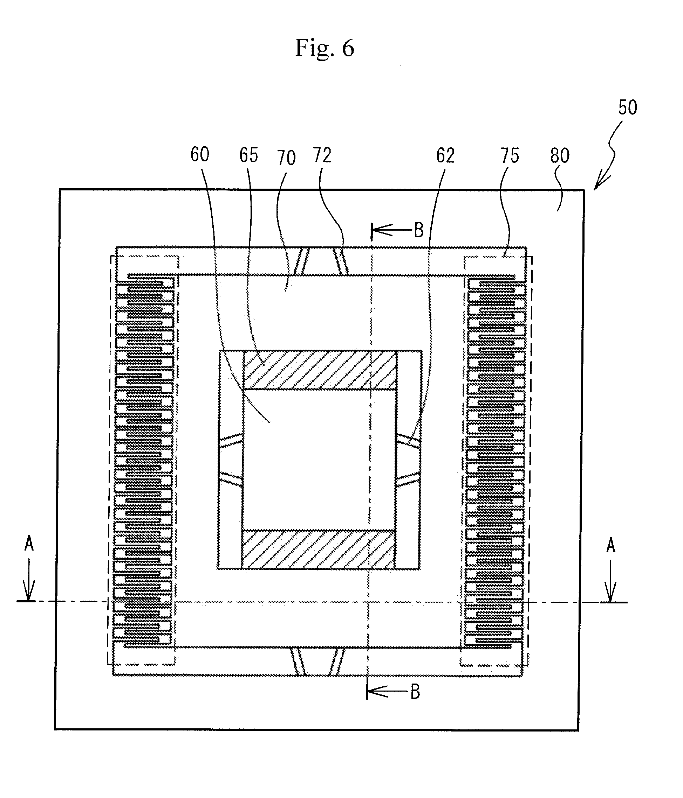

Fig. 6 is a plan view of the double gimbal portion 50. As shown in Fig. 6, the double gimbal portion 50 has a square frame portion 80, a drive gimbal portion 70 and a sense gimbal portion 60. The sense gimbal portion 60 is mechanically coupled with the drive gimbal portion 70 by torsion bars 62 provided on a pair of opposite sides of the sense gimbal portion 60. The torsion bars 62 hold the sense gimbal portion 60. The sense gimbal portion 60 has a pair of parallel plate electrodes 65 on the other pair of opposite sides of the sense gimbal portion 60. One of the pair of the parallel plate electrodes 65 is fixed to the sense gimbal portion 60, and the other is fixed to the drive gimbal portion 70.

The drive gimbal portion 70 is mechanically connected to the frame portion 80 by torsion bars 72 provided on a pair of opposite outer sides of the drive gimbal portion 70. Two pairs of comb electrodes 75 are respectively provided on another pair of opposite sides of the drive gimbal portion 70. One of the pair of comb electrodes 75 on each side is fixed to the drive gimbal portion 70, and the other of the pair of comb electrodes 75 is fixed to the frame portion 80.

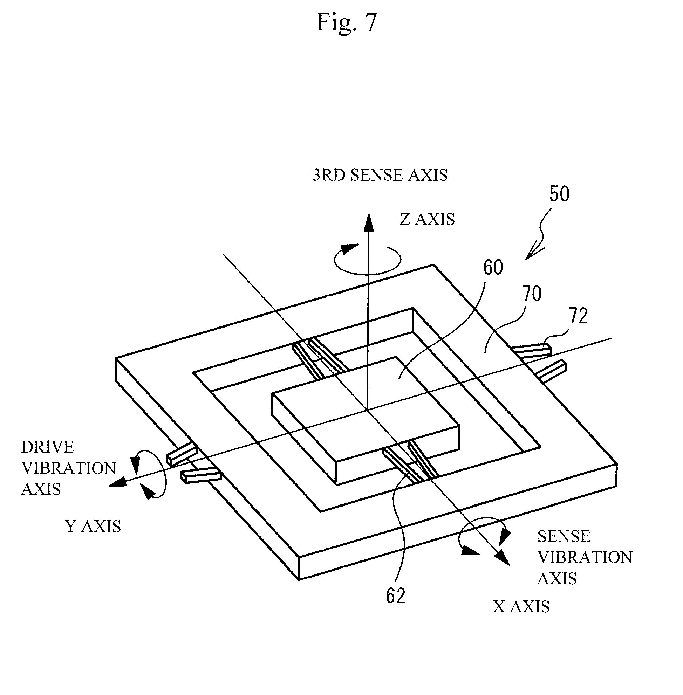

Fig. 7 is a perspective view of the angular velocity sensor , and shows the principles of sensing angular velocities by the double gimbal portion 50. In Fig. 7, the frame portion 80, the parallel plate electrodes 65 and the comb electrodes 75 are not illustrated for the sake of simplicity. Referring to Fig. 7, an x axis extends in a direction in which the two pairs of torsion bars 62 are connected, a y axis extends in a direction in which the two pairs of torsion bars 72 are connected, and a z axis extends in a direction perpendicular to the double gimbal portion 50. Using the comb electrodes 75, the drive gimbal portion 70 is driven together with the sense gimbal portion 60 about the y axis (drive vibration axis). If an angular velocity about the z axis (third detection axis) is applied in the above-mentioned state, Coriolis force is developed in the direction orthogonal to the y axis. Thus, the drive gimbal portion 70 is urged so as to vibrate about the x axis (sense vibration axis) orthogonal to the y axis. However, the drive gimbal portion 70 is fixed to the frame portion 80 by the torsion bars 72 and is now allowed to vibrate. Thus, the sense gimbal portion 60 vibrates about the x axis. The parallel plate electrodes 65 senses the magnitude of vibration of the sense gimbal portion 60. The angular velocity about the third sensing axis can be detected from the magnitude of vibration of the sense gimbal portion 60.

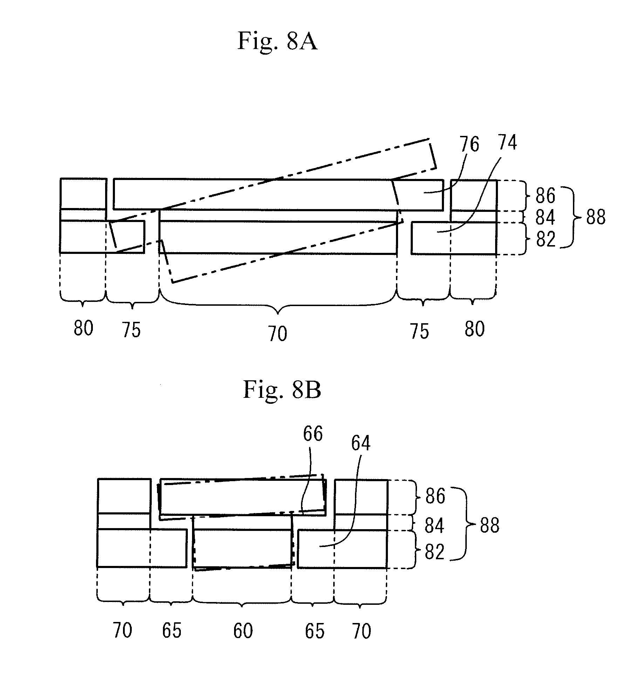

Fig. 8A is a cross-sectional view of the double gimbal portion 50 taking along a line A-A shown in Fig. 6, and Fig. 8B is a cross-sectional view taken along a line B-B shown in Fig. 6. Referring to Figs. 8A and 8B, the double gimbal portion 50 has an SOI (Semiconductor On Insulator) substrate 88 having a silicon substrate 82, an oxide film 84, and a silicon layer 86 laminated in this order. Each of the sense gimbal portion 60, the drive gimbal portion 70 and the frame portion 80 is composed of the silicon substrate 82, the oxide film 84 and the silicon layer 86. Referring to Fig. 8A, the comb electrodes 75 are composed of a group of electrodes 74 mechanically connected to the silicon substrate 82 of the frame portion 80, and a group of electrodes 76 mechanically connected to the silicon layer 86 of the gimbal portion 70. A voltage applied between the ground of electrodes 74 and the group of electrodes 76 vibrates the drive gimbal portion 70 as indicated by a two-dotted chain line shown in Fig. 8A.

Referring to Fig. 8B, the parallel plate electrodes 65 are composed of a lower electrode 64 mechanically connected to the silicon substrate 82 of the drive gimbal portion 70, and an upper electrode 66 mechanically connected to the silicon layer 86 of the sense gimbal portion 60. When the sense gimbal portion 60 vibrates as shown by a two-dotted chain line shown in Fig. 8B, the electrostatic capacitance between the lower electrode 64 and the upper electrode 66 is changed. The magnitude of vibration of the sense gimbal portion 60 can be sensed by detecting a change in the electrostatic capacitance.

In the above-mentioned structure, the inner gimbal portion of the double gimbal portion 50 is the sense gimbal portion 60, and the outer gimbal portion thereof is the drive gimbal portion 70. Alternatively, the inner and outer gimbal portions of the double gimbal portion 50 may be the drive and sense gimbal portions, respectively. In the above-mentioned structure, the electrodes for driving the drive gimbal portion 70 are the comb electrodes 75, and the electrodes for sensing the vibration of the sense gimbal portion 60 are the parallel plate electrodes 65. However, the electrodes for driving the drive gimbal portion 70 and those for sensing the vibration of the sense gimbal portion 60 may be either the comb electrodes or parallel plate electrodes. However, it is preferable to employ the comb electrodes 75 for vibrating the drive gimbal portion 70 in order to increase the vibration of the drive gimbal portion 70 and obtain a relatively high sensitivity.

In the angular velocity sensor of the first embodiment, as shown in Fig. 1, the first tuning-fork vibrator 10a has the first base and the first arms, which extend in the direction of the first sensing axis (first direction). The second tuning-fork vibrator 10b has the second base and the second arms, which extend in the direction of the second sensing axis (second direction). Thus, as has been described with reference to Figs. 5A and 5B, the angular velocity sensor is capable of sensing the angular velocity about the first axis by the first tuning-fork vibrator 10a and sensing the angular velocity about the second axis of the second tuning-fork vibrator 10b. As has been described with reference to Fig. 7, the double gimbal portion 50 has the drive gimbal portion 70 that vibrates about the drive vibration axis (axis extending in the fourth direction), and the sense gimbal portion 60 that vibrates about the sense vibration axis (axis extending in the fifth direction). Thus, the double gimbal portion 50 can sense the angular velocity about the third sensing axis (axis extending in the third direction).

As shown in Figs. 5A and 5B, the tuning-fork vibrator 10 senses the angular velocity about the axis in the direction in which the arms 11 and 12 extend. The double gimbal portion 50 senses the angular velocity about the axis perpendicular to the plane that includes the sense gimbal portion 60 and the drive gimbal portion 70. Thus, as shown in Fig. 3, the double gimbal portion 50 is mounted above the first and second tuning-fork vibrators 10a and 10b. That is, the double gimbal portion 50 is mounted in the third sensing axis (third direction) with respect to the first and second tuning-fork vibrators 10a and 10b. With this arrangement, it is possible to reduce the area for mounting the angular velocity sensor capable of sensing angular velocities about three axes.

Particularly, as shown in Fig. 1, the first and second tuning-fork vibrators 10a and 10b are mounted on the same mount surface of the package 30 with the interposing support portions 20a and 20b. In other words, the first and second tuning-fork vibrators 10a and 10b are provided in the direction horizontal to the plane (mount surface of the package 30) that includes the direction of the first sensing axis (first direction) and the direction of the second sensing axis (second direction). It is thus possible to reduce the height of the package 30. The first and second tuning-fork vibrators 10a and 10b may be provided so that at least parts of the tuning-fork vibrators 10a and 10b overlap with each other with regard to the direction horizontal to the plane that includes the first and second sensing axes.

It is essential that the directions of the first, second and third sensing axes (first, second and third directions) are mutually different from each other. The first, second and third directions may be arbitrary directions. The specific arrangement in which the first, second and third directions are mutually orthogonal to each other makes it possible to sense angular velocities about axes in the three orthogonal directions. Particularly, the third sensing axis is perpendicular to the plane that includes the sense gimbal portion 60 and the drive gimbal portion 70 of the double gimbal portion 50. It is preferable that the third sensing axis is mutually orthogonal to the first and second sensing axes. With this arrangement, it is possible to reduce the volume for mounting.

As shown in Fig. 7, preferably, the direction of the drive vibration axis (fourth direction) and the direction of the sense vibration axis (fifth direction) are orthogonal to each other. It is thus possible to efficiently sense the angular velocity about the third sensing axis by the sense gimbal portion 60.

### [Second Embodiment]

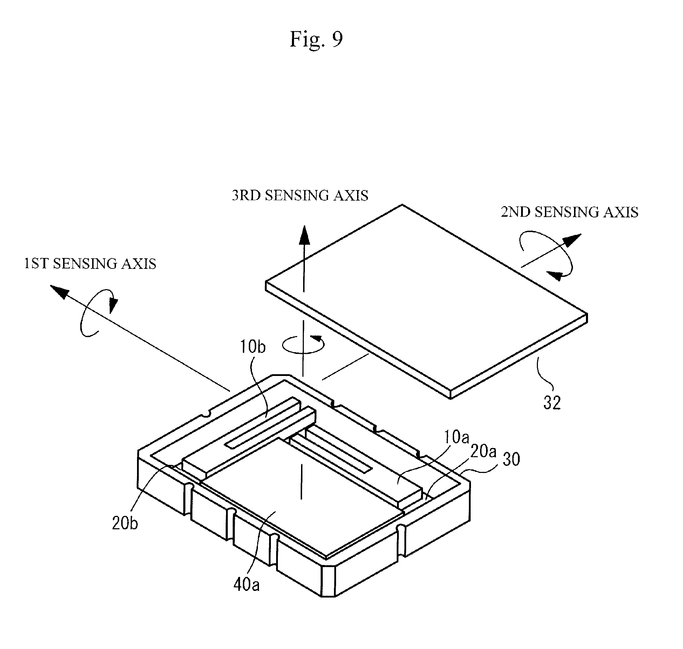

Fig. 9 is a perspective view of an angular velocity sensor in accordance with a second embodiment in which a lid 32 is removed from the package 30. The second embodiment differs from the first embodiment in that a third angular velocity sensing part 40a of the double gimbal portion 50 is mounted, through the control circuit 34 (not shown), on the mount surface on which the first and second tuning-fork vibrators 10a and 10b are mounted. That is, the double gimbal portion 50, the first tuning-fork vibrator 10a and the second tuning-fork vibrator 10b are mounted on the plane that includes the direction of the first sensing axis (first direction) and the direction of the second sensing axis (second direction). The other structure of the second embodiment is the same as that of the first embodiment. According to the second embodiment, the volume for mounting can be further reduced, as compared to the first embodiment. At least, parts of the double gimbal portion 50, the first tuning-fork vibrator 10a and the second tuning-fork vibrator 10b may overlap with each other in the direction horizontal to the plane that includes the first and second sensing axes.

Preferably, the first embodiment is employed when the first and second tuning-fork vibrators 10a and 10b are smaller than the double gimbal portion 50. The second embodiment is preferably employed when the first and second tuning-fork vibrators 10a and 10b are greater than the double gimbal portion 50.

When the first and second tuning-fork vibrators 10a and 10b are housed in the package 30, as shown in Fig. 9, the smallest area for mounting is available by arranging the tip end of the first tuning-fork vibrator 10a so as to face a side of the second tuning-fork vibrator 10b. In this arrangement, the tip end of the first tuning-fork vibrator 10a is preferably arranged so as to face a side of the tip end of the second tuning-fork vibrator 10b. In other words, the first and second tuning-fork vibrators 10a and 10b are arranged so as to form an L shape. With this arrangement, it is possible to secure the area for mounting the double gimbal portion 50 and arrange the double gimbal portion 50 along the sides of the first and second tuning-fork vibrators 10a and 10b. Preferably, the bases of the first and second tuning-fork vibrators 10a and 10b are away from each other in order to prevent the vibrations of the first and second tuning-fork vibrators 10a and 10b from interfering with each other.

### [Third Embodiment]

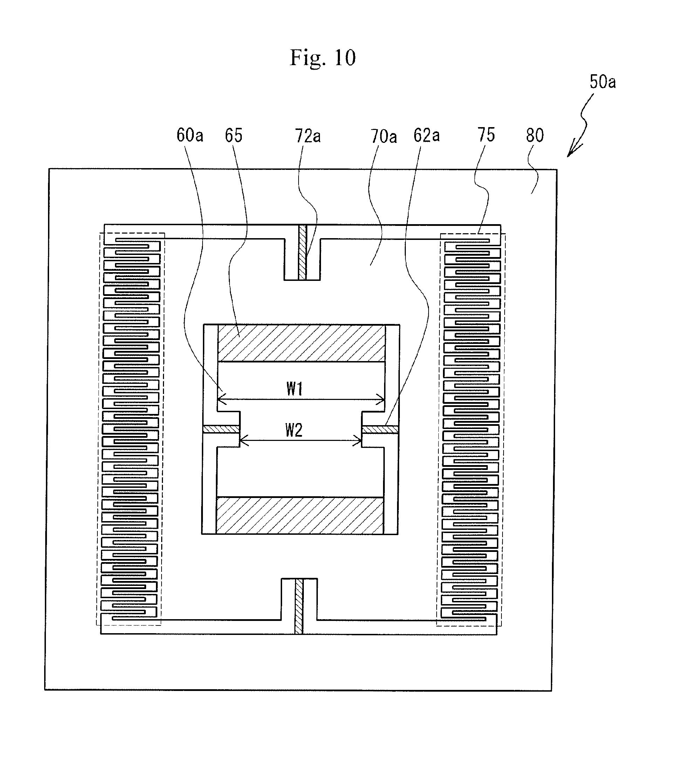

A third embodiment has sense and drive gimbal portions formed into an H shape. Fig. 10 is a plan view of a double gimbal portion 50a employed in the third embodiment. A sense gimbal portion 60a is formed into an H shape, and a drive gimbal portion 70a is formed into an H shape. A single torsion bar 62a is provided on each of opposite sides of the sense gimbal portion 60a, and a single torsion bar 72a is provided on each of opposite sides of the drive gimbal portion 70a. The other structure of the third embodiment is the same as that shown in Fig. 6.

According to the third embodiment, the torsion bars 62a (first torsion bars) are provided on the opposite sides of the sense gimbal portion 60a in order to support the sense gimbal portion 60a. The sense gimbal portion 60a is formed into the H shape, and a maximum width W connecting the opposite sides on which the torsion bars 62a are provided is greater than a width W2 connecting opposite side portions to which the torsion bars 62 are fixed. This arrangement increases the moment of inertia of the sense gimbal portion 60a and improves the sensitivity of angular velocity as compared to the first embodiment.

The parallel plate electrodes 65 have the width W1 that is greater than the width W2. It is thus possible to obtain a greater amplitude of the sense signal even when the sense gimbal portion 60a has the same vibration amplitude as that of the first embodiment. Thus, the sensitivity of angular velocity can be improved. This improvement can be obtained even when the electrodes of the sense gimbal portion 62a are of comb type.

Similarly, the drive gimbal portion 70a is formed into the H shape, and the maximum width connecting the sides on which the torsion bars 72a (second torsion bars) are attached is greater than the maxim width connecting the opposite side portions to which the torsion bars 72a are attached. Further, the comb electrodes 75 have a width greater than the width connecting the opposite side portions of the drive gimbal portion 70a to which the torsion bars 72 are attached. With this structure, for an amplitude of the drive signal equal to that used in the first embodiment, the drive gimbal portion 70a has a greater amplitude of vibration. This holds true for another arrangement in which the electrodes of the drive gimbal portion 72a are parallel plate electrodes.

In at least one of the sense gimbal portion and the drive gimbal portion, the maximum width of the gimbal portion is greater than the width that connects the opposite side portions to which the torsion bars are attached. The gimbal portion is not limited to the H shape but may have an arbitrary shape as long as the maximum width of the gimbal portion is greater than the width that connects the opposite side portions to which the torsion bars are attached. It is possible to provide two torsion bars forming a V shape (first embodiment), a singe torsion bar (third embodiment), or three or more torsion bars on each of the opposite sides of the gimbal portion.

The present invention is not limited to the specifically disclosed embodiments, but other embodiments and variations may be made without departing from the scope of the present invention.

The present application is based on Japanese Patent Application No. 2007-012166 filed January 23, 2007, the entire disclosure of which is hereby incorporated by reference.

## Claims

1. An angular velocity sensor comprising:
a first tuning-fork vibrator having a first base and first arms extending from the first base in a first direction;
a second tuning-fork vibrator having a second base and second arms extending from the second base in a second direction; and
a double gimbal portion that has a drive gimbal portion vibrating about an axis extending in a fourth direction, and a sense gimbal portion vibrating about an axis extending in a fifth direction and senses an angular velocity about an axis extending in a third direction.

2. The angular velocity sensor according to claim 1, wherein the first, second and third directions are mutually orthogonal to each other.

3. The angular velocity sensor according to claim 1 or 2, wherein the fourth and fifth directions are orthogonal to each other.

4. The angular velocity sensor according to any of the preceding claims, wherein the first and second tuning-fork vibrators are provided so that at least parts of the first and second tuning-fork vibrators overlap with each other in a direction horizontal to a plane that includes the first and second directions.

5. The angular velocity sensor according to any of the preceding claims, wherein the double gimbal portion is provided in the third direction with respect to the first and second tuning-fork vibrators.

6. The angular velocity sensor according to any of the preceding claims, wherein the double gimbal portion, the first tuning-fork vibrator and the second tuning-fork vibrator are provided so that at least parts of the double gimbal portion, the first tuning-fork vibrator and the second tuning-fork vibrator overlap with each other in a direction horizontal to a plane that includes the first and second directions.

7. The angular velocity sensor according to any of the preceding claims, wherein the first and second tuning-fork vibrators are arranged so as to form an L shape, and the double gimbal portion is arranged along sides of the first and second tuning-fork vibrators.

8. The angular velocity sensor according to any of the preceding claims, further comprising first torsion bars provided on opposite sides of the sense gimbal portion in order to support the sense gimbal portion, wherein a maximum width connecting the opposite sides of the sense gimbal portion is greater than a width connecting opposite side portions of the sense gimbal portion to which the first torsion bars are fixed.

9. The angular velocity sensor according to any of the preceding claims, further comprising second torsion bars provided on opposite sides of the drive gimbal portion in order to support the drive gimbal portion, wherein a maximum width connecting the opposite sides of the drive gimbal portion is greater than a width connecting opposite side portions of the drive gimbal portion to which the second torsion bars are fixed.
